# EUROPEAN PATENT SPECIFICATION

(11) **EP 2 933 506 B1**
(45) Date of publication and mention of the grant of the patent: **30.11.2016**
(21) Application number: 15159524.6
(22) Date of filing: 17.03.2015
(51) Int. Cl.: F16B 7/04

(54) **ADAPTER INSERT FOR BARS OF A SUPPORT FRAME OF SANITARY APPLIANCES**
ADAPTEREINSATZ FÜR STÄBE EINES STÜTZRAHMENS SANITÄRER ANLAGEN
INSERT D'ADAPTATEUR POUR BARRES D'UN CADRE DE SUPPORT D'APPAREILS SANITAIRES

(30) Priority: 17.03.2014 IT MI20140438
(43) Date of publication of application: 21.10.2015
(73) Proprietor: VALSIR S.p.A., 25078 Vestone (BS) (IT)
(72) Inventor: Varotti, Mario, 25078 Vestone (IT); Frigo, Flavio, 31050 Ponzano Veneto (IT)
(74) Representative: Cernuzzi, Daniele

(56) References cited:
- US-A- 1 792 100
- US-A- 5 297 886

## Description

The present invention relates to an adapter insert for bars of a support frame of sanitary appliances, performing the function of adapting a first type of bar to the use with a second type of bar (having in particular a different cross section with respect to the first type of bar).

The adapter insert of the invention serves, in particular, to incorporate the first type of bar in modular systems making use of the second type of bars.

In the field of the installation of sanitary appliances and related systems, the use of wall systems is increasingly widespread, additional to the structure of the building, which allow a bathroom to be installed in an easy, practical, and clean manner.

Several systems are known allowing the installer to obtain wall systems comprising support frames onto which the sanitary appliances are secured, provided with the necessary connections to the supply and discharge pipes.

In general, these systems use bars of a determined type, in particular having a particular cross section, often specifically designed so as to be incorporated in the system and in particular to be hooked by special coupling devices which are specifically designed.

In general, the incorporation of bars of a different type is possible in a modular system making use of a determined type of bars, having a determined cross section, only by creating relatively complex mechanical connections.

US 5 297 886 A discloses a U-shaped connector bracket for connecting tubular frame members.

It is an object of the present invention to provide an adapter insert for bars of a support frame of sanitary appliances, which allows, in a simple, quick, and efficient manner, a first type of bar to be adapted for use with a second type of bar (having in particular a different cross section with respect to the first type of bar).

Therefore, the present invention relates to an adapter insert for bars of a support frame of sanitary appliances, as defined in essential terms in the appended claim 1 and, in its additional features, in the dependent claims.

The adapter insert of the invention allows a first type of bar to be adapted for use with a second type of bar (having in particular a different cross section with respect to the first type of bar), in a simple, quick, and efficient manner.

Further features and advantages of the present invention will be apparent from the following description of exemplary, non-limiting embodiments thereof, with reference to the figures of the appended drawings, in which:
- Fig. 1 is a perspective view of an adapter insert in accordance with the invention, shown to adapt a first type of bar to the use with a second type of bar provided with a specific coupling device;
- Fig. 2 is a perspective view of the adapter insert of the invention and the bar into which it is insertable;
- Fig. 3 is a further perspective view of the adapter insert of the invention;
- Fig. 4 is an exploded perspective view of the adapter insert of the invention and the coupling device of Fig. 1;
- Fig. 5 is a perspective view of the coupling device of Fig.1;
- Fig. 6 is a perspective view of an alternative embodiment of the adapter insert of the invention;
- Fig. 7 is a perspective view of a further embodiment of the adapter insert of the invention.

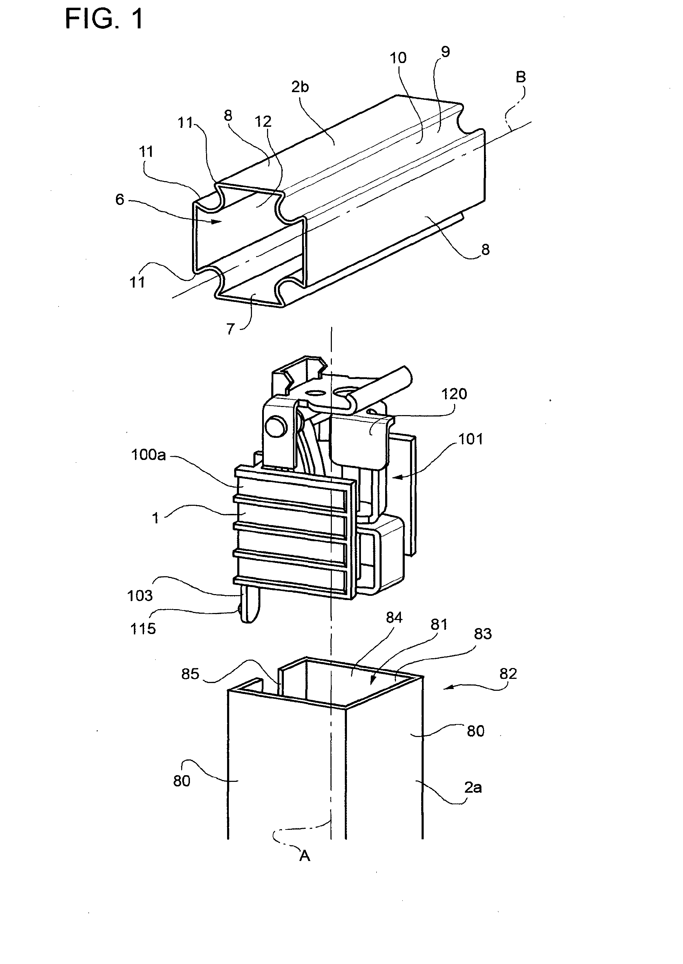

An adapter insert for bars of a support frame of sanitary appliances is indicated with 1 in Fig. 1; the adapter insert 1 serves to adapt a first type of bar 2a to the use with a second type of bar 2b, having in particular a different cross section with respect to the first type of bar 2a, so as to incorporate the first type of bar 2a in modular systems making use of the second type of bar 2b.

In particular, the adapter insert 1 serves to connect a first bar 2a to a second bar 2b.

The first bar 2a is for example a conventional bar to make installation structures of sanitary appliances, in particular a profiled tubular bar made of a metal material, for example, steel.

The bar 2a is a hollow bar having a substantially quadrangular cross section, in particular substantially squared, having four closed-loop orthogonal lateral walls 80 delimiting an inner cavity 81.

The bar 2a extends along a longitudinal axis A and has at least one open end 82 having an opening 83 defined by a frontal edge 84, through which the cavity 81 is accessed.

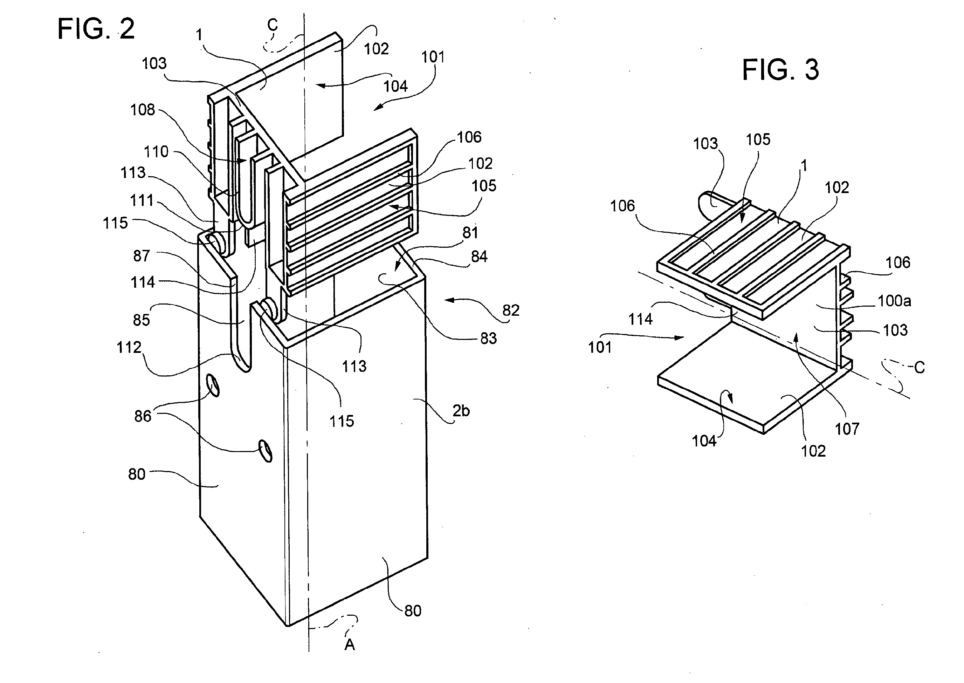

With reference also to Fig. 2, the end 82 has a slot 85, formed through a lateral wall 80 of the bar 2a and extending from the frontal edge 84 parallel to the axis A.

The same lateral wall 80 of the bar 2a provided with the slot 85 is also provided with a pair of holes 86 formed through the same lateral wall 80 and arranged side by side to each other on opposite sides of the slot 85 and at a preset distance from the frontal edge 84.

The slot 85 is defined by an open peripheral edge 87, connected to the frontal edge 84.

The bar 2b is a profiled tubular bar made of a metal material, for example steel.

In particular, the bar 2b extends along a longitudinal axis B and consists of a tubular section bar which is internally hollow and has a cross-shaped closed cross section.

The bar 2b has a longitudinal inner cavity 6, accessible through at least one longitudinal end opening 7.

The bar 2 has two pairs of lateral walls 8 arranged like the sides of a square; the lateral walls 8 of each pair face and are parallel to each other, and are perpendicular to the lateral walls 8 of the other pair.

In addition, the bar 2 has four recessed edges 9, arranged between two lateral walls 8 adjacent and defined by respective longitudinal outer channels 10 having a curved cross section. Therefore, each lateral wall 8 has two longitudinal opposite edges 11, parallel to the axis B.

Internally, the bar 2b has four inner channels 12, each of which is defined by a lateral wall 8 of the bar 2 and a pair of edges 9.

With reference also to Fig. 3, the adapter insert 1 is shaped so as to be insertable in the cavity 81 of the bar 2a through the opening 83.

The adapter insert 1 consists of a monolithic body 100a, preferably made of plastic (polymer material, possibly reinforced or loaded), extending along an axis C which, in use, is aligned with the axis A of the bar 2a.

The adapter insert 1 and in particular the body 100a has a substantially C-shaped cross section about the axis C and defines an internal seat 101.

In particular, the adapter insert 1 has three walls C-shaped arranged and delimiting the seat, and precisely: a pair of opposite lateral walls 102, substantially facing each other, and a bottom wall 103 connecting respective ends of the two lateral walls 102.

The lateral walls 102 have respective inner surfaces 104, facing each other and facing the seat 101, and respective outer surfaces 105, opposite the inner surfaces 104.

The inner surfaces 104 are preferably substantially flat, and preferably smooth.

The outer surfaces 105 are provided with reinforcement ribs 106, for example substantially parallel to the axis C.

The lateral walls 102 are flexible with respect to each other and to the bottom wall 103; in particular, the lateral walls 102 are capable of bending both approaching each other, and moving away from each other.

The lateral walls 102 project from the bottom wall 103 and, in undeformed conditions (i.e., if the lateral walls 102 are not subjected to external loads) are preferably inclined with respect to the bottom wall 103 and converge towards each other from the bottom wall 103 and towards respective free ends.

The bottom wall 103 has an inner surface 107 facing the seat 101 and preferably substantially flat and preferably smooth, and an outer surface 108, opposite the inner surface 107 and provided with reinforcement ribs 106, for example, substantially parallel to the axis C.

The adapter insert 1 has a projection 110 insertable in the slot 85 of the bar 2a. The projection 110 projects from the outer surface 108 and has shape mating the slot 85, so as to be insertable in the slot 85; the projection 110 has a bottom axial shoulder 111 transverse to the axis C; when the adapter insert 1 is housed inside the cavity 81 and the projection 110 is housed in the slot 85, the shoulder 111 rests against a bottom abutment portion 112 of the peripheral edge 84 of the slot 85.

The adapter insert 1 also has a pair of side-by-side and parallel legs 113 projecting from an end edge 114 of the bottom wall 103 parallel to the axis C. The legs 113 are provided with respective teeth 115 projecting from the legs 113 for engaging, when the adapter insert 1 is housed inside the cavity 81, respective holes 86.

By inserting the adapter insert 1 in the cavity 81 of the bar 2a, the bar 2a may receive a coupling device 120 which is capable of hooking a bar 2b.

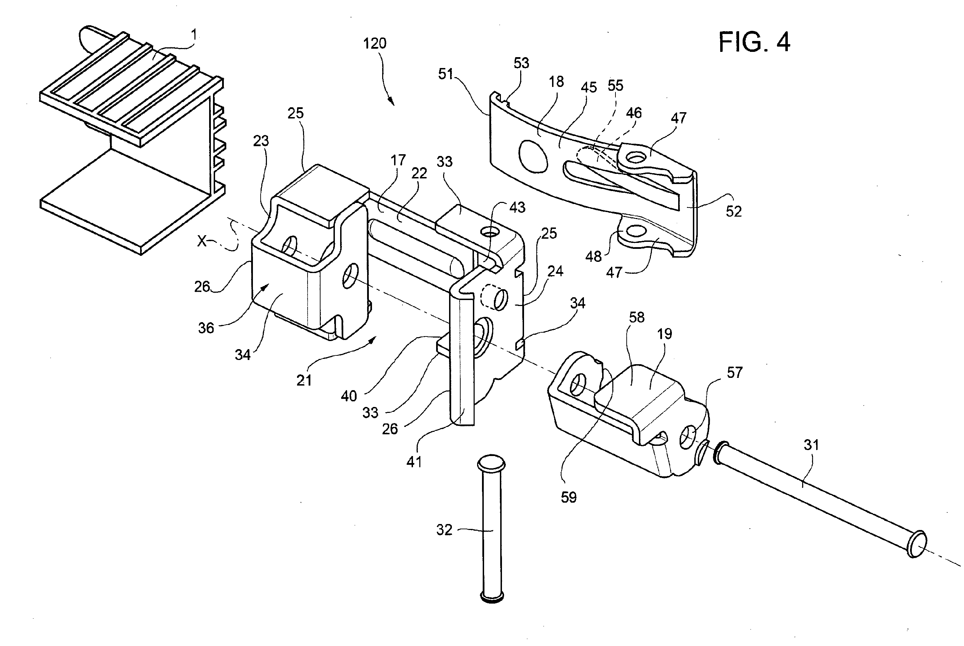

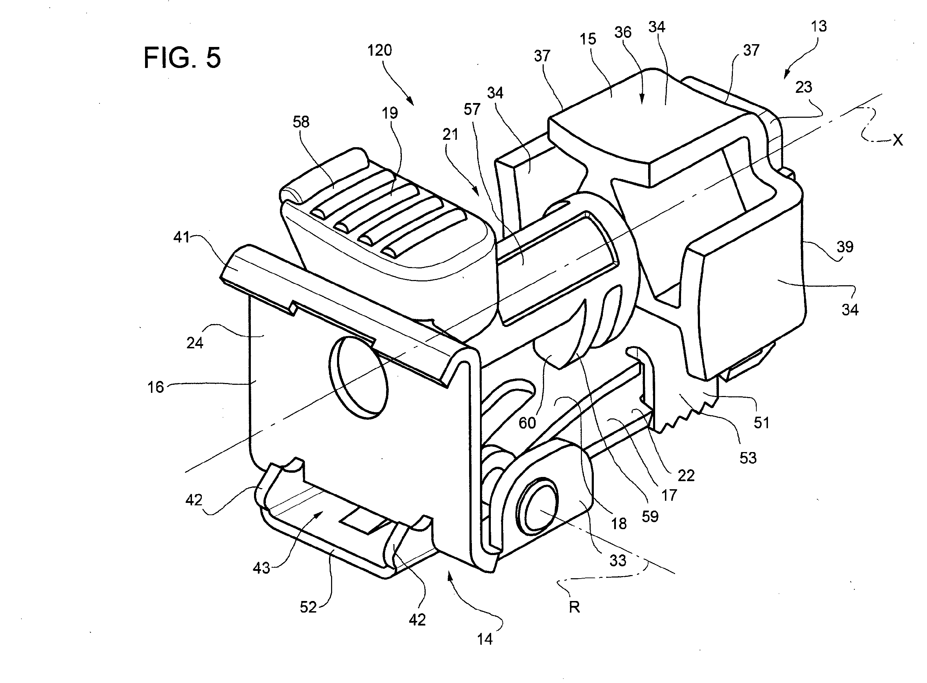

With reference also to the Figs. 4 and 5, the coupling device 120 extends along an axis X between two axial ends 13, 14, provided with an insert portion 15, insertable inside the cavity 6 of a bar 2b through an opening 7 or in the seat 101 of the adapter insert 1; and with a fastening portion 16, apt to hook on a lateral wall 8 of a bar 2b, respectively.

In particular, the coupling device 120 comprises a support body 17, a leaf spring 18 supported by the support body 17, and a control member 19, also supported by the support body 17 and acting on the leaf spring 18.

The support body 17 defines a housing zone 21 where the leaf spring 18 and the control member 19 are located.

The support body 17, for example composed of a suitably shaped single monolithic metal piece, comprises for example a base plate 22, extending between the axial ends 13, 14, and two end flanges 23, 24 facing each other, arranged at respective axial ends 13, 14 and substantially perpendicular to the base plate 22.

Each flange 23, 24 has a root edge 25, connected to the base plate 22, and a free end edge 26, opposite the root edge 25.

The two flanges 23, 24 support a longitudinal pin 31, extending between the flanges 23, 24 along the axis X.

A transversal pin 32 extends perpendicular to the axis X between two opposite support ears 33 projecting from the base plate 22 in the proximity of the flange 24 (at the axial end 14).

The insert portion 15 comprises four radial arms 35 cross-shape arranged about the axis X and substantially perpendicular to one another; the arms 35 project radially and then longitudinally (being L-shaped) from the flange 23 towards the opposite flange 24 and are angularly spaced apart from one another by empty spaces.

Each arm 35 has a radially outer contact surface 36, preferably saddle-shaped (i.e., slightly concave), and a pair of opposite longitudinal lateral edges 37 (parallel to axis X) protruding with respect to a central zone of the arm 35.

The arms 35 (or some of them) can be composed of respective parts of the support body 17, or of respective portions of a different piece, for example, made of plastic (polymer material), mounted around the pin 31 and fitted on the flange 23.

The contact surfaces 36 of the arms 35 are arranged so as to cooperate in contact (via at least their own lateral edges 37) with respective inner side surfaces of respective lateral walls 8 of a bar 2, when the insert portion 15 is inserted in the cavity 6 of the bar 2.

The arms 35 have respective front chamfers 39, facing the axial end 13 and defined for example by respective curved or chamfered surfaces, so as to facilitate the insertion of the insert portion 15 in the cavity 6 even in the presence of small burrs and/or defects of the bar 2.

The arms 35 are shaped so as to insert in respective inner channels 12 of a bar 2.

The insert portion 15 is also provided with an axial abutment 40, formed for example by a stop edge projecting from the base plate 22.

The fastening portion 16 comprises at least one pair of opposite teeth 41, 42, movable with respect to each other operated by the control member 19 and shaped so as to hook respective longitudinal edges 11 of a lateral wall 8 of a bar 2.

In the illustrated examples, at least one first fixed tooth 41 (i.e., integrally fitted to the support body 17) is carried by the flange 24; at least one movable tooth 42 (in the sense that it is movable with respect to the support body 17 and thus to the fixed tooth 41) is positioned on the leaf spring 18.

In the illustrated examples, there are a fixed tooth 41, elongated along the entire free end edge 26, and two movable teeth 42, transversely spaced apart from one another; it is understood that multiple fixed teeth 41 may be present, laterally facing one another, as well as one or more movable teeth 42.

The tooth 41 projects from the free end edge 26 of the flange 24 and is shaped so as to hook a longitudinal edge 11 of a lateral wall 8 of a bar 2.

The support body 17 has a through opening 43, arranged at the axial end 14 and formed in particular in the base plate 22 and in the flange 24.

The opening 43 comprises in particular two end notches 44, formed parallel to one another across the flange 24.

The leaf spring 18 preferably consists of a single monolithic piece, in particular made of a metal material, and comprises a central leaf 45, an elastic arm 46 projecting from the central leaf 45, and two lateral sides 47 folded substantially perpendicular to the central leaf 45.

The leaf spring 18 is positioned between the longitudinal pin 31 and the base plate 22 and is hinged to the transversal pin 32, by two side eyelets 48 formed on respective sides 47.

The leaf spring 18, in particular the central leaf 45, has a first end portion 51, arranged at the axial end 13 of the device 1; and a second end portion 52, axially opposite with respect to the end portion 51 and inserted through the opening 43 and projecting beyond the flange 24.

The end portion 51 is provided with one or more locking teeth 53 protruding towards the base plate 22. For example, the locking teeth 53 are arranged transversely with respect to the central leaf 45 (Fig. 4), facing a special transversal slot formed through the base plate 22 at the axial end 13; or the locking teeth 53 project from respective lateral edges of the central leaf 45 towards the base plate 22 (Fig. 5).

The end portion 52 is provided with the movable teeth 42 (movable, i.e., integral with the end portion 51 of the leaf spring 18 with respect to the support body 17 and thus to the fixed teeth 41).

The teeth 42 project from the end portion 52 towards the fixed teeth 41 and are shaped so as to hook in turn a longitudinal edge 11 of a lateral wall 8 of a bar 2.

In the illustrated example, the end portion 52 has two teeth 42, laterally spaced from one another and facing and opposite the fixed tooth 41.

The teeth 42 are carried by respective sides 47 of the leaf spring 18 and project beyond the flange 24 and are axially spaced from the flange 24; the sides 47 are inserted in the opening 48 and are aligned to respective notches 44.

The elastic arm 46 is defined by a cut and folded portion of the central leaf 45 of the leaf spring 18. The arm 46 extends from the central leaf 45 and has a free end 55 contacting the base plate 22.

The leaf spring 18 rotates about a rotation axis R defined by the transversal pin 32 and substantially perpendicular to the axis X. The pin 32 is located between the two end portions 51, 52, nearest to the end portion 52.

The control member 19 is mounted on the support body 17 and is rotatable via the longitudinal pin 31 about a rotation axis defined by the axis X (or parallel to the axis X).

In particular, the control member 19 is mounted to be rotatable on the pin 31, via a pair of axially spaced holes.

The control member 19 is advantageously composed of a monolithic piece, for example made of plastic (polymer material), and comprises: a support portion 57 fitted around the pin 31 and rotating (on the pin 31 or integral with the pin 31) with respect to the support body 17 about the axis X; a handling portion 58 defined in particular by a small plate radially projecting from the support portion 57; and at least one cam 59 radially protruding from the support portion 57 and abutting against the leaf spring 18.

The cam 59 has a curved peripheral contact edge 60, with a rounded vertex.

By the rotation of the handling portion 58 about the axis X, the coupling device 1 assumes two operative configurations:
- a rest configuration, in which: the leaf spring 18 is not loaded by the cam 59; the locking teeth 53 are retracted in the housing zone 21 (i.e., they do not protrude beyond the base plate 22); the movable teeth 42 are in a spaced position with respect to the fixed teeth 41, being spaced apart therefrom to such an extent as to allow the fastening portion 16 to be mounted on a lateral wall 8 of a bar 2; the handling portion 58 protrudes from the housing zone 21, in particular beyond the free end edge 26 of the flange 24;
- a locking configuration, in which: the leaf spring 18 is loaded by the cam 59, which pushes the leaf spring 18 towards the base plate 22; the locking teeth 53 protrude from the housing zone 21, beyond the base plate 22; the movable teeth 42 are in a close position with respect to the fixed teeth 41, being at such a distance from the fixed tooth 41 as to clamp a lateral wall 8 arranged between the movable teeth 42 and the fixed teeth 41.

In use, in order to make the bar 2a compatible with the coupling device 120, the adapter insert 1 is inserted in the cavity 81 of the bar 2a, until bringing the teeth 115 to engage the holes 86 and the projection 110 to engage the slot 85, with the shoulder 114 against the abutment portion 112 of the slot 85.

The bar 2a may now receive the insert portion 15 of the coupling device 20 in a rest configuration.

Next, the insert portion 15 is inserted in the seat 101 of the adapter insert 1; the arm 35 face and contact respective walls 102, 103 of the adapter insert 1 and one of the lateral walls 80 of the bar 2a; suitably (but not necessarily), the insert portion 15 is arranged with the arm 35 provided with the locking teeth 53 against the bottom wall 103 of the adapter insert 1.

Once the position of the coupling device 120 has been adjusted in the bar 2a, the bar 2b is hooked via the fastening portion 16.

By manually rotating the control member 19, by acting on the handling portion 58, the coupling device 120 is brought to the locking configuration and the coupling device 120 is locked with respect to both bars 2a, 2b.

In fact, the rotation of the control member 19 about the axis X moves the cam 59 to load the leaf spring 18, which is pushed, against the elastic action of the arm 46, towards the base plate 22.

In particular, the leaf spring 18 rotates about the rotation axis R defined by the transversal pin 32, pushed by the cam 59: the end portion 52 with the locking teeth 53 is pushed towards the base plate 22, until bringing the locking teeth 53 beyond the base plate 22; the locking teeth 53 contact an inner surface 104, 107 of the seat 101 arranged beyond the base plate 22 (preferably, the surface 107 of the bottom wall 103), or a lateral wall 8 of the bar 2a arranged beyond the base plate 22, and are pressed against it.

At the same time, the opposite end portion 51, with the movable teeth 42, moves towards the free end edge 26 of the flange 24, bringing the movable teeth 42 closer to the fixed teeth 41, hence clamping the lateral wall 8 of the second bar 2 between the teeth 41, 42. The sides 47 enter the notches 44.

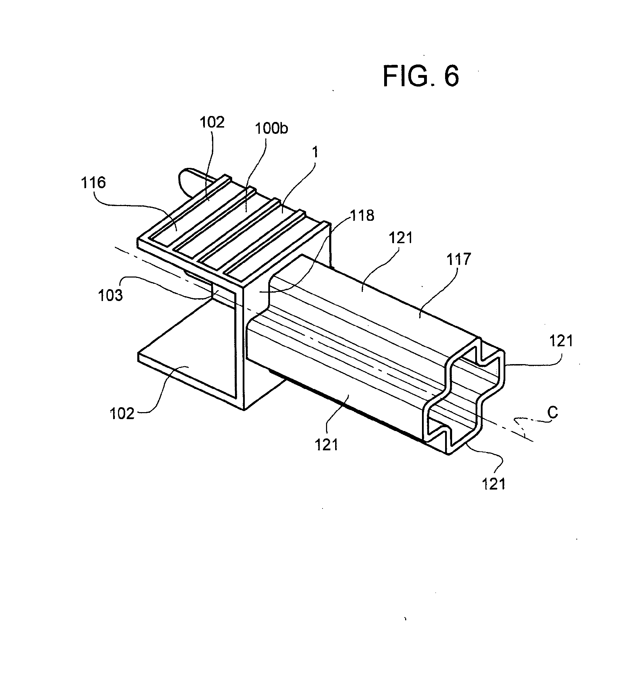

Also in the variant of Fig. 6, where the same or similar details to those already described are indicated with the same numbers, the adapter insert 1 consists of a monolithic body 100b, preferably made of plastic (polymer material, possibly reinforced or filled), extending along an axis C which, in use, is aligned with the axis A of the bar 2a.

The adapter insert 1 and in particular the body 100b comprise two portions 116, 117, aligned along the axis C and respectively shaped so as to be insertable in the cavity 81 of the bar 2a and in the cavity 6 of the bar 2b.

The two portions 116, 117 are connected by a connecting wall 118 perpendicular to the axis C and the portions 116, 117 project axially from respective opposite faces of the connecting wall 118.

The portion 116 has the shape of the body 100a described above, therefore it has a substantially C-shaped cross section about the axis C; however, in this case, the connecting wall 118 connects the walls 102, 103.

The lateral walls 102 remain flexible, in particular being capable of bending with respect to each other and to the bottom wall 103; in particular, the lateral walls 102 are capable of bending both approaching each other, and moving away from each other, in particular with respective free end edges.

The portion 117 has a cross-shaped cross section, mating the cross section of the bar 2b.

Therefore, the portion 117 comprises four longitudinal ribs 121 parallel to the axis C projecting perpendicularly from the connecting wall 118 and arranged about the axis C and joined to form a cross; the ribs 121 are shaped so as to be insertable in respective inner channels 12 of the bar 2b.

By inserting the portion 116 of the adapter insert 1 in the cavity 81 of the bar 2a and the portion 117 in the cavity 6 of the bar 2b, it is possible to elongate the bar 2a with the bar 2b.

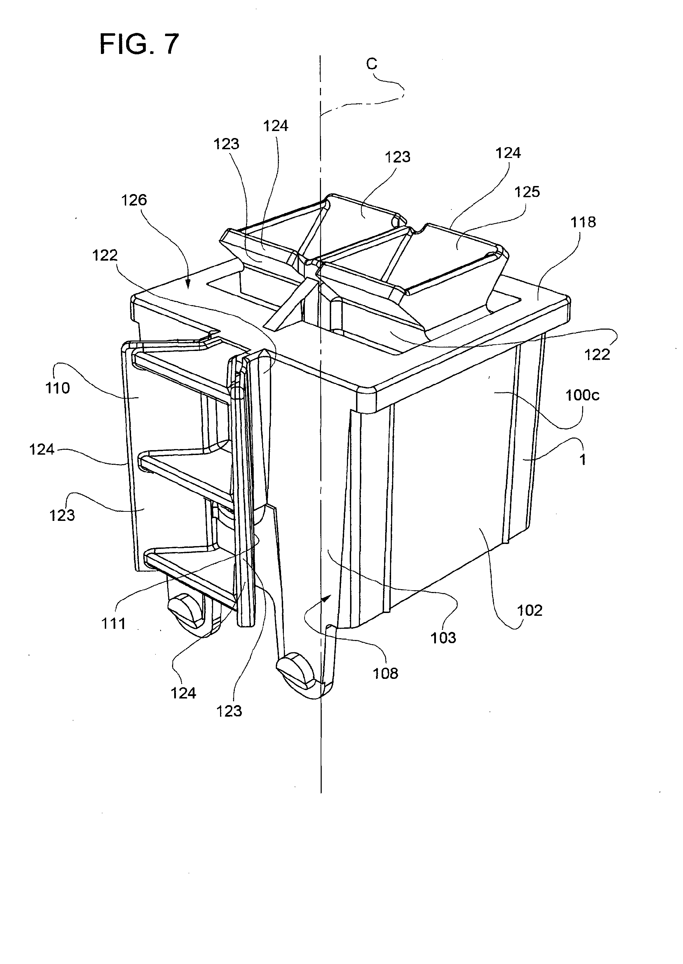

In the variant of Fig. 7, where the same or similar details to those already described are indicated with the same numbers, the adapter insert 1 consists again of a monolithic body 100c made of plastic extending along an axis C and provided with at least one projection 110 projecting outwardly, but the projection 110 is shaped so as to be hooked by a coupling device 120 of the type described above.

The projection 110 projects again from the bottom wall 103, and precisely from the outer surface 108 of the wall 103 and has a root edge 122, connected to the surface 108, and a pair of lateral sides 123 projecting from the root edge 122 and extending substantially parallel to the axis C. The root edge 122 has a shape mating the slot 85, so as to be at least partially insertable in the slot 85 so that the projection 110 projects externally of the slot 85, and is provided with the shoulder 111 which, when the adapter insert 1 is housed inside the cavity 81 and the projection 110 is housed in the slot 85, abuts against the bottom abutment portion 112 of the peripheral edge 84 of the slot 85.

The sides 123, optionally connected by transversal ribs, protrude from the root edge 122 and thus from the body 100c and are preferably inclined and convergent towards the root edge 122 and the body 100c. In any case, the sides 123 have respective longitudinal edges 124 having such a shape as to be hooked by the fastening portion 16 of the coupling device 120 and in particular by respective opposite teeth 41, 42 of the fastening portion 16.

Advantageously, the adapter insert 1 is provided with a second projection 125 protruding from a connecting wall 118 perpendicular to the axis C and connecting the lateral walls 102 with the bottom wall 103. In particular, the projection 125 protrudes from an outer surface 126, opposite the seat 101, of the wall 118.

The projection 125 has a shape similar to the projection 110 and has in particular a root edge 122, connected to the surface 126, and a pair of lateral sides 123 projecting from the root edge 122 and extending substantially perpendicular to the axis C. The sides 123, optionally connected by transversal ribs, protrude from the root edge 122 and hence from the body 100c and are preferably inclined and convergent towards the root edge 122 and the body 100c and have respective longitudinal edges 124 having such a shape as to be hooked by respective opposite teeth 41, 42 of the fastening portion 16 of a further coupling device 120.

The projections 110, 125 allow the bars of the support frame of sanitary appliances to be connected together also laterally.

Finally, it is understood that further modifications and variations not departing from the scope of the appended claims can be made to the adapter insert described and illustrated herein.

## Claims

1. An adapter insert (1) for bars of a support frame of sanitary appliances, in particular for connecting a first bar (2a) to a second bar (2b) having different cross sections, the adapter insert (1) consisting of a monolithic body (100a, 100b, 100c) extending along an axis (C) and comprising at least one portion, having a substantially C-shaped cross section about the axis (C) and shaped so as to be insertable in a cavity (81) of a first bar (2a) and formed by a pair of opposite lateral walls (102), substantially facing each other, and a bottom wall (103) connecting the lateral walls (102), the lateral walls (102) being flexible with respect to each other and to the bottom wall (103), being capable of bending to both approach each other and to move away from each other; the adapter insert (1) being **characterized by** having a pair of side-by-side and parallel legs (113) projecting from an end edge (114) of the bottom wall (103) parallel to the axis (C) and are provided with respective teeth (115) projecting from the legs (113) for engaging in use, when the adapter insert (1) is housed inside the cavity (81), respective holes (86) of the first bar (2a).

2. An adapter insert according to claim 1, wherein the lateral walls (102) and the bottom wall (103) delimit an internal seat (101) shaped for receiving a coupling device (120) adapted to hook a second bar (2b), having a cross section different from the first bar (2a).

3. An adapter insert according to claim 1 or 2, wherein the lateral walls (102) have respective substantially flat, and preferably smooth first inner surfaces (104), facing each other and the seat (101), and respective first outer surfaces (105), opposite the first inner surfaces (104) and provided with first reinforcement ribs (106).

4. An adapter insert according to one of the preceding claims, wherein the lateral walls (102) project from the bottom wall (103) and, in undeformed conditions, are inclined with respect to the bottom wall (103) and converge towards each other from the bottom wall (103) and towards respective free ends.

5. An adapter insert according to one of the preceding claims, wherein the bottom wall (103) has a second inner surface (107), facing the seat (101) and substantially flat and preferably smooth, and a second outer surface (108), opposite the second inner surface (107) and provided with second reinforcement ribs (106).

6. An adapter insert according to one of the preceding claims, wherein the adapter insert (1) has a projection (110) insertable in a slot (85) of the-first bar (2a) and having a bottom axial shoulder (111) transverse to the axis (C) and cooperating in use, when the adapter insert (1) is housed inside the cavity (81) of the first bar (2a), against a bottom abutment portion (112) of the slot (85).

7. An adapter insert according to one of the preceding claims, wherein the adapter insert (1) comprises a first portion (116), having a substantially C-shaped cross section about the axis (C) and formed by said pair of opposite lateral walls (102) and by said bottom wall (103); and a second portion (117), aligned with the first portion (116) along the axis (C) and having a cross section shaped so as to be insertable in a second cavity (6) of a second bar (2b).

8. An adapter insert according to claim 7, wherein the two portions (116, 117) are connected by a connecting wall (118) perpendicular to the axis (C) and the portions (116, 117) project axially from respective opposite faces of the connecting wall (118).

9. An adapter insert according to claim 7 or 8, wherein said second portion (117) has a cross-shaped cross section, mating the cross section of the second bar (2b).

10. An adapter insert according to one of claims 7 to 9, wherein the second portion (117) comprises four ribs (121) projecting perpendicularly from the connecting wall (118) and arranged about the axis (C) and joined to form a cross.

11. An adapter insert according to one of the preceding claims, comprising one or two projections (110, 125) projecting from the body (100c) and shaped so as to be hooked by respective coupling devices (120).

## Patentansprüche

1. Adaptereinsatz (1) für Stäbe eines Stützrahmens sanitärer Anlagen, insbesondere zum Verbinden eines ersten Stabes (2a) mit einem zweiten Stab (2b) mit unterschiedlichen Querschnitten, wobei der Adaptereinsatz (1) aus einem monolithischen Körper (100a, 100b, 100c) besteht, der sich entlang einer Achse (C) erstreckt, und zumindest einen Abschnitt umfasst, der einen im Wesentlichen C-förmigen Querschnitt um die Achse (C) aufweist und derart geformt ist, dass er in einen Hohlraum (81) eines ersten Stabes (2a) einführbar ist, und durch ein Paar einander gegenüberliegender bzw. entgegengesetzter Seitenwände (102), die einander im Wesentlichen zugewandt sind, und eine untere Wand (103), welche die Seitenwände (102) miteinander verbindet, gebildet ist, wobei die Seitenwände (102) gegenüber einander und der unteren Wand (103) flexibel sind und dabei imstande sind, sich zu biegen, um sich sowohl einander anzunähern als sich auch voneinander zu entfernen; wobei der Adaptereinsatz (1) **dadurch gekennzeichnet ist, dass** er ein Paar nebeneinander angeordneter und paralleler Schenkel (113) aufweist, die parallel zur Achse (C) von einem Endrand bzw. einer Endkante (114) der unteren Wand (103) ausgehend hervorstehen und mit entsprechenden Zähnen (115) versehen sind, die von den Schenkeln (113) abstehen, um im Gebrauch, wenn der Adaptereinsatz (1) in dem Hohlraum (81) aufgenommen ist, in entsprechende Löcher (86) des ersten Stabes (2a) einzugreifen.

2. Adaptereinsatz nach Anspruch 1, wobei die Seitenwände (102) und die untere Wand (103) einen inneren Sitz (101) begrenzen, der geformt ist, eine Kupplungsvorrichtung (120) aufzunehmen, die dazu angepasst ist, einen zweiten Stab (2b) einzuhaken, der einen vom ersten Stab (2a) abweichenden Querschnitt aufweist.

3. Adaptereinsatz nach Anspruch 1 oder 2, wobei die Seitenwände (102) entsprechende im Wesentlichen flache und vorzugsweise ebene erste Innenflächen (104), die einander und dem Sitz (101) zugewandt sind, sowie entsprechende erste Außenflächen (105) aufweisen, die gegenüberliegend bzw. entgegengesetzt den ersten Innenflächen (104) angeordnet und mit ersten Verstärkungsrippen (106) versehen sind.

4. Adaptereinsatz nach einem der vorhergehenden Ansprüche, wobei die Seitenwände (102) von der unteren Wand (103) abstehen und, im nicht deformierten Zustand, gegenüber der unteren Wand (103) geneigt sind und ausgehend von der unteren Wand (103) und in Richtung entsprechender freier Enden aufeinander zulaufen.

5. Adaptereinsatz nach einem der vorhergehenden Ansprüche, wobei die untere Wand (103) eine zweite Innenfläche (107) hat, die dem Sitz (101) zugewandt und im Wesentlichen flach und vorzugsweise eben ist, sowie eine zweite Außenfläche (108), die gegenüber bzw. entgegengesetzt der zweiten Innenfläche (107) angeordnet und mit zweiten Verstärkungsrippen (106) versehen ist.

6. Adaptereinsatz nach einem der vorhergehenden Ansprüche, wobei der Adaptereinsatz (1) einen Vorsprung (110) aufweist, der in einen Schlitz (85) des ersten Stabes (2a) einführbar ist und eine untere axiale Schulter (111) aufweist, die quer zur Achse (C) verläuft und im Gebrauch, wenn der Adaptereinsatz (1) in dem Hohlraum (81) des ersten Stabes (2a) aufgenommen ist, gegen einen unteren Anschlagabschnitt (112) des Schlitzes (85) kooperiert.

7. Adaptereinsatz nach einem der vorhergehenden Ansprüche, wobei der Adaptereinsatz (1) einen ersten Abschnitt (116) umfasst, der einen im Wesentlichen C-förmigen Querschnitt um die Achse (C) aufweist und durch das Paar einander gegenüberliegender bzw. entgegengesetzter Seitenwände (102) und durch die untere Wand (103) gebildet ist; und einen zweiten Abschnitt (117) umfasst, der mit dem ersten Abschnitt (116) entlang der Achse (C) fluchtet und einen Querschnitt aufweist, der so geformt ist, dass er in einen zweiten Hohlraum (6) eines zweiten Stabes (2b) einführbar ist.

8. Adaptereinsatz nach Anspruch 7, wobei die beiden Abschnitte (116, 117) durch eine Verbindungswand (118), die senkrecht zur Achse (C) verläuft, verbunden sind und die Abschnitte (116, 117) axial von den entsprechenden gegenüberliegenden bzw. entgegengesetzten Flächen der Verbindungswand (118) abstehen.

9. Adaptereinsatz nach Anspruch 7 oder 8, wobei der zweite Abschnitt (117) einen kreuzförmigen Querschnitt aufweist, welcher zum Querschnitt des zweiten Stabes (2b) passt.

10. Adaptereinsatz nach einem der Ansprüche 7 bis 9, wobei der zweite Abschnitt (117) vier Rippen (121) umfasst, die von der Verbindungswand (118) ausgehend senkrecht abstehen und um die Achse (C) herum angeordnet und miteinander verbunden sind, um ein Kreuz zu bilden.

11. Adaptereinsatz nach einem der vorhergehenden Ansprüche, umfassend einen oder mehrere Vorsprünge (110, 125), die von dem Körper (100c) abstehen und geformt sind, um durch entsprechende Kupplungsvorrichtungen (120) eingehakt zu werden.

## Revendications

1. Insert d'adaptateur (1) pour des barres d'un châssis de support d'appareils sanitaires, en particulier pour raccorder une première barre (2a) à une seconde barre (2b) ayant des sections transversales différentes, l'insert d'adaptateur (1) consistant en un corps monolithique (100a, 100b, 100c) s'étendant le long d'un axe (C) et comprenant au moins une partie, ayant une section transversale en forme de C autour de l'axe (C) et conformée de manière à pouvoir être insérée dans une cavité (81) d'une première barre (2a) et formée par une paire de parois latérales opposées (102), se faisant sensiblement face, et une paroi inférieure (103) raccordant les parois latérales (102), les parois latérales (102) étant flexibles l'une par rapport à l'autre et relativement à la paroi inférieure (103), étant aptes à fléchir pour se rapprocher et s'éloigner l'une de l'autre ; l'insert d'adaptateur (1) étant **caractérisé en ce qu'**il comporte une paire de jambages (113) côte à côte et parallèles faisant saillie depuis un bord d'extrémité (114) de la paroi inférieure (103) parallèlement à l'axe (C) et dotés de dents respectives (115) faisant saillie depuis les jambages (113) pour engager, à l'utilisation, lorsque l'insert d'adaptateur (1) est logé à l'intérieur de la cavité (81), des trous respectifs (86) de la première barre (2a).

2. Insert d'adaptateur selon la revendication 1, dans lequel les parois latérales (102) et la paroi inférieure (103) délimitent un siège interne (101) conformé pour recevoir un dispositif d'accouplement (120) apte à accrocher une seconde barre (2b), ayant une section transversale différente de celle de la première barre (2a).

3. Insert d'adaptateur selon la revendication 1 ou 2, dans lequel les parois latérales (102) comportent des premières surfaces internes (104) respectives sensiblement plates et, de préférence, lisses, tournées l'une vers l'autre et vers le siège (101), et des premières surfaces externes (105) respectives, opposées aux premières surfaces internes (104) et pourvues de premières nervures de renfort (106).

4. Insert d'adaptateur selon l'une des revendications précédentes, dans lequel les parois latérales (102) font saillie depuis la paroi inférieure (103) et, dans un état non déformé, sont inclinées par rapport à la paroi inférieure (103) et convergent l'une vers l'autre depuis la paroi inférieure (103) et en direction d'extrémités libres respectives.

5. Insert d'adaptateur selon l'une des revendications précédentes, dans lequel la paroi inférieure (103) comporte une seconde surface interne (107), tournée vers le siège (101) et sensiblement plate et, de préférence, lisse, et une seconde surface externe (108), opposée à la seconde surface interne (107) et dotée de secondes nervures de renfort (106).

6. Insert d'adaptateur selon l'une des revendications précédentes, l'insert d'adaptateur (1) comportant une saillie (110) pouvant être insérée dans une fente (85) de la première barre (2a) et comportant un épaulement axial inférieur (111) transversal à l'axe (C) et coopérant, à l'utilisation, lorsque l'insert d'adaptateur (1) est logé à l'intérieur de la cavité (81) de la première barre (2a), contre une partie de butée inférieure (112) de la fente (85).

7. Insert d'adaptateur selon l'une des revendications précédentes, l'insert d'adaptateur (1) comprenant une première partie (116), ayant une section transversale sensiblement en forme de C autour de l'axe (C) et formée par ladite paire de parois latérales opposées (102) et par ladite paroi inférieure (103) ; et une seconde partie (117), alignée avec la première partie (116) le long de l'axe (C) et ayant une section transversale façonnée pour pouvoir être insérée dans une seconde cavité (6) d'une seconde barre (2b).

8. Insert d'adaptateur selon la revendication 7, dans lequel les deux parties (116, 117) sont raccordées par une paroi de connexion (118) perpendiculaire à l'axe (C) et les parties (116, 117) font saillie axialement depuis des faces opposées respectives de la paroi de connexion (118).

9. Insert d'adaptateur selon la revendication 7 ou 8, dans lequel ladite seconde partie (117) a une section transversale en forme de croix, épousant la section transversale de la seconde barre (2b).

10. Insert d'adaptateur selon l'une des revendications 7 à 9, dans lequel la seconde partie (117) comprend quatre nervures (121) faisant saillie perpendiculairement depuis la paroi de connexion (118) et agencées autour de l'axe (C) et raccordées pour former une croix.

11. Insert d'adaptateur selon l'une des revendications précédentes, comprenant une ou deux saillies (110, 125) dépassant du corps (100c) et façonnées de manière à être accrochées par des dispositifs d'accouplement (120) respectifs.
